# EUROPEAN PATENT APPLICATION

(11) **EP 4 538 179 A1**
(43) Date of publication of application: **16.04.2025**
(21) Application number: 24203350.4
(22) Date of filing: 27.09.2024
(51) Int. Cl.: B64D 15/12, B64D 33/02, F02C 7/045, F02C 7/047

(54) **ICE PROTECTION SYSTEM FOR AN AIRCRAFT**

(30) Priority: 12.10.2023 US 202363589679 P; 22.12.2023 US 202318393851
(71) Applicant: The Boeing Company, Arlington, VA 22202 (US)
(72) Inventor: LI, RICHARD, Arlington, 22202 (US); WEN, ED, Arlington, 22202 (US); CHAMBERS, JEFFREY, Arlington, 22202 (US); BAILEY, MICHAEL JASON, Arlington, 22202 (US); GREEN, MATTHEW T., Arlington, 22202 (US); FREEMAN, DANIEL B., Arlington, 22202 (US)
(74) Representative: Lissandrini, Marco

(57) **Abstract**

A system and a method include a heating layer including perforations extending from a first surface to a second surface opposite from the first surface. The perforations provide acoustic paths. The heating layer is configured to provide electrically resistive heating to a component. An acoustic layer can be coupled to the heating layer. The perforations extend to the acoustic layer.

## Description

### CROSS-REFERENCE TO RELATED APPLICATIONS

This application relates to and claims priority benefits from U.S. Provisional Patent Application No. 63/589,679, filed October 12, 2023, as well as of U.S. Non-Provisional Patent Application No. 18/393,851, filed December 22, 2023, which are both hereby incorporated by reference in their entirety.

### FIELD OF THE DISCLOSURE

Examples of the present disclosure generally relate to an ice protection system for an aircraft.

### BACKGROUND

Composite materials have been used as structural elements in various applications. Composite materials, such as fiber-reinforced polymers, have a relatively high strength to weight ratio. The high strength to weight ratio makes these materials desirable for vehicle construction, such as aircraft. These materials typically include many layers or plies of a reinforcement material bound within a matrix material to form a heterogenous material with combined properties that are different from the reinforcement material and matrix materials individually.

For some applications, it is desirable for the composite material to provide multiple functions. For example, it may be desirable to have a single laminate structure that provides both structural support and conducts current for powering an electrical load, communication transmission, and/or the like. Power distribution to embedded conductive materials within a laminated composite structure requires a means of delivering electric current to a known location in the thickness and specific region of the laminated structure.

Some existing systems embed one or more insulated wires through the thickness of the laminate structure. The assembly of the laminate may include forming cut-outs or splices through multiple plies, and feeding the wire through the cut-outs as the plies are sequentially applied on a mandrel or other tool to form a laminate stack up. This process of embedding wires into the structure at multiple locations during the structure formation can be detrimental to structural properties of the laminate structure and can inhibit proper interfaces between structural plies of the laminate structure and adjacent components, such as a cellular core. For example, routing wires through the surface of the laminate structure at multiple locations may result in discontinuities, such as bumps and stress concentrations, within the laminate structure. The discontinuities may degrade the structural properties of the laminate, requiring additional plies (and therefore weight) to satisfy material strength requirements. Furthermore, the insulation material of the wires may contaminate the matrix material (e.g., resin) of the laminate structure, degrading the material properties. Wire stripping and other wire preparation and routing tasks may increase the risk of foreign object debris (FOD) contaminating the laminate structure. The embedded wires also may introduce a failure risk attributable to handling of the wires and interference between the wires and adjacent components. During the life of the system, the embedded wires may experience fatigue and wear over time which could cause the wires to fail. Furthermore, in at least one application, perforations are formed through the laminate structure. The perforations can be used for noise attenuation, distributing a fluid through the laminate structure, and/or the like. With embedded electrical wires present within the thickness of the laminate structure, there is a risk that wires may be damaged during the perforation formation process, which could render the electrical load that is powered by the wires inoperable. Conversely, avoiding the embedded wires may undesirably restrict the area that is perforated, limiting the effectiveness of the perforations.

Various aircraft include engines having nacelles. Typical nacelles rely upon jet exhaust extracted from an engine core (that is, bleed air) to prevent formation and/or build-up of ice on an inlet leading edge. Bleed air extraction reduces efficiency of the engine and constrains material selection at the leading edge due to the high exhaust temperatures involved. Further, such systems typically run a length of the nacelle, thereby adding weight, and further reducing efficiency. Additionally, extracting bleed air can reduce engine performance and efficiency.

### SUMMARY OF THE DISCLOSURE

A need exists for an improved ice protection system for an engine of aircraft. A need exists for a lighter ice protection system that increases operating efficiency of an engine of an aircraft.

With those needs in mind, certain examples of the present disclosure provide a system including a heating layer including perforations extending from a first surface to a second surface opposite from the first surface. The perforations attenuate aircraft noise. The perforations provide acoustic paths. The heating layer is configured to provide electrically resistive heating to a component.

In at least one example, the system also includes an acoustic layer coupled to the heating layer. The perforations can extend into the acoustic layer. In at least one example, the heating layer overlays at least a portion of the acoustic layer. The heating layer can be a carbon veil including carbon fibers or carbon nanotubes, or other materials.

The component can include a nacelle of an engine of an aircraft.

In at least one example, the heating layer includes a dielectric layer, a conductive heater coupled to the dielectric layer, and one or more films coupled to the conductive heater. The dielectric layer can include fiberglass. The one or more films can include a nickel chemical vapor deposition film. In at least one example, the perforations extend through the dielectric layer, the conductive heater, and the one or more films. The dielectric layer, the conductive heater, and the one or more films can be laminated together.

Certain examples of the present disclosure provide an aircraft including a propulsion system including a nacelle having an inlet cowl. The inlet cowl includes an acoustic layer coupled to an ice protection system. The ice protection system includes a heating layer including perforations extending from a first surface to a second surface opposite from the first surface. The perforations can include an acoustic liner. The perforations provide acoustic paths. The heating layer is configured to provide electrically resistive heating to nacelle.

Certain examples of the present disclosure provide a method including forming perforations in a heating layer. The perforations extend from a first surface to a second surface opposite from the first surface, wherein the perforations provide acoustic paths, and wherein the heating layer is configured to provide electrically resistive heating to a component; and coupling the heating layer to an acoustic layer, wherein the perforations extend to the acoustic layer.

### BRIEF DESCRIPTION OF THE DRAWINGS

These and other features, aspects, and advantages of the present disclosure will become better understood when the following detailed description is read with reference to the accompanying drawings in which like numerals represent like parts throughout the drawings, wherein:
Figure 1 illustrates a block diagram of an ice protection system, according to an example of the present disclosure.
Figure 2 illustrates a plan view of an ice protection system, according to an example of the present disclosure.
Figure 3 illustrates a cross-sectional view of the ice protection system through line 3-3 of Figure 2.
Figure 4 illustrates a block diagram of a laminated composite structure, according to an example of the present disclosure.
Figure 5 illustrates a perspective view of an aircraft.
Figure 6 illustrates an isometric lateral view of a nacelle of a propulsion system of the aircraft.
Figure 7 illustrates a front view of an inlet cowl of the nacelle shown in Figure 6.
Figure 8 shows a portion of the inlet cowl indicated by a dashed circle in Figure 7.
Figure 9 illustrates a transverse cross-sectional view of a portion of an inlet cowl of a nacelle, according to an example of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular property may include additional elements not having that property.

Engine manufacturers continue to increase fan diameters and reduce engine core sizes to increase bypass ratio, which can improve fuel efficiency. To counteract the increased weight and drag from a larger diameter nacelle, significant benefit can be realized by reducing the axial length of the nacelle. This, in turn, reduces the amount of area available for acoustic treatment. As such, certain examples of the present disclosure provide an ice protection system that overlays at least a portion of the acoustic treatment, thereby allowing expansion of the acoustically-treated portion of the inlet into a water capturing areas of a leading edge.

In at least one example, an ice protection system replaces a high temperature bleed air system. The ice protection system is an electrical ice protection system cured into a structural laminate. The ice protection system is configured to operate at a temperature low enough to allow the use of composite materials traditionally used for acoustic attenuation. The ice protection system enables multi-function structures wherein the acoustic liner can be pulled much further forward toward a leading edge of a nacelle. The ice protection system can overlap one or more portions of acoustic regions, thereby allowing for a shortened nacelle that reduces weight and drag without sacrificing noise protection or ice protection.

Examples of the present disclosure facilitate the expansion of the acoustic liner into previously hard-walled areas to increase acoustic attenuation while reducing overall length of the nacelle. The lower operating temperature and electrical ice protection system reduce a need for high temperature-capable materials at a leading edge of the nacelle. In at least one example, the ice protection system integrates a continuously conductive network heater, which enables ice protection co-located with perforated, acoustically attenuating zones.

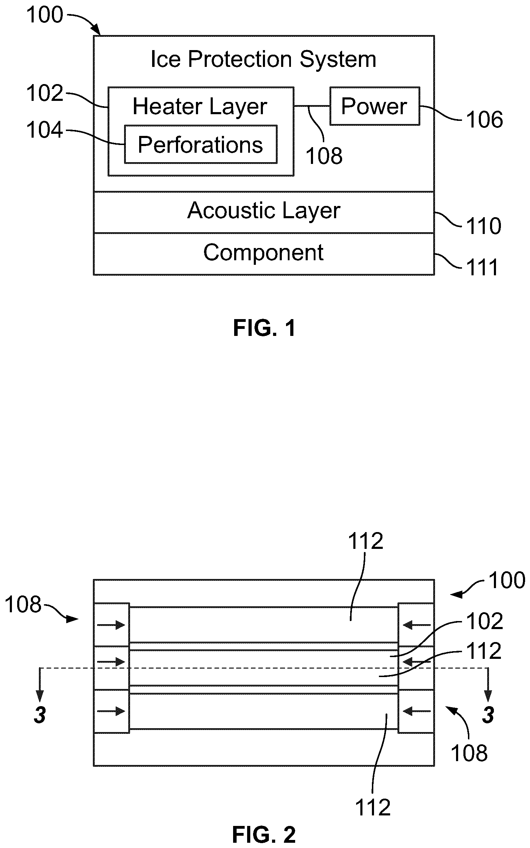

Figure 1 illustrates a block diagram of an ice protection system 100, according to an example of the present disclosure. The ice protection system 100 includes a heater layer 102 having perforations 104. The heater layer 102 is an electrical layer configured to generate heat. The heater layer 102 is electrically coupled to a source of power 106, such as through one or more leads 108. While shown as an ice protection system 100, another type of system can be used. For example, a heating system can include the heater layer 102 coupled to the acoustic layer 110.

In at least one example, the heater layer 102 is a carbon veil, which includes randomly oriented carbon fibers. As another example, the heater layer 102 includes carbon nanotubes. The heater layer 102 can be any type of continuously conductive material configured to provide an electrically resistive heater. For example, electrical current generated by the source of power 106 flows into the heater layer 102, thereby increasing the temperature of the heater layer 102.

The perforations 104 are holes, openings, channels, or the like formed through the heater layer 102. For example, the perforations 104 can be holes having a diameter of about 0,13 cm (i.e., 0.05 inches) or less. In at least one example, the perforations 104 can have diameters of about 0,51 cm (i.e., 0.2 inches) or less. Optionally, the perforations 104 can have diameters less than or greater than about 0,51 cm (i.e., 0.2 inches) (for example, about 0,25 cm, i.e., 0.1 inches, or about 1,27 cm, i.e., 0.5 inches). The perforations 104 can be spaced apart from each other a distance of about 2,54 cm, i.e., 1 inch, or less. For example, neighboring (that is, closest) perforations 104 can be spread less than about 0,51 cm, i.e., 0.2 inches, from one another. Optionally, the perforations 104 can be spaced apart from each other a distance that is greater than about 2,54 cm, i.e., 1 inch, such as 5,08 cm, i.e., 2 inches or more.

The perforations 104 extend through the heater layer 102. For example, the perforations extend between and through a first surface (such as a top surface) and a second surface (such as a bottom surface) that is opposite from the first surface. The perforations 104 provide acoustic paths configured to dampen acoustic energy. As such, the heater layer 102 is acoustically perforated.

In at least one example, the heater layer 102 is integrated into a laminate composite structure. The composite structure can further include an acoustic layer 110, such as an acoustic liner of a nacelle of propulsion system (such as an engine) of an aircraft. In at least one example, the ice protection system 100, including the heater layer 102, overlays (for example, covers) at least a portion of the acoustic layer 110. For example, an entirety of the ice protection system 100 overlays at least a portion of the acoustic layer 110. As another example, the ice protection system 100 overlays an entirety of the acoustic layer 110. As another example, the acoustic layer 110 includes one or more portions that are not covered by the ice protection system 100.

The acoustic layer 110 can be part of a component 111. For example, the component 111 can include the acoustic layer 110 and the ice protection system 100, which can include the heater layer 102. The heater layer 102 and the acoustic layer 110 can be integrated into the component 111. Optionally, the heater layer 102 and the acoustic layer 110 can be separately secured to the component 111.

In at least one example, the component 111 is a nacelle of an engine of an aircraft. Optionally, the component 111 can be various other types of structures that are configured to be heated, and also to have acoustic energy dampened. As an example, the component 111 can be a portion of a ventilation, heating, cooling, refrigeration system, a portion of a residential or commercial building, or the like.

As described herein, a system includes the heater layer 102 including perforations 104 extending from a first surface to a second surface opposite from the first surface. The heater layer 102 is configured to provide electrically resistive heating to the component 111. The acoustic layer 110 is coupled to the heater layer 102. The perforations 104 extend to the acoustic layer 110. The heater layer 102 overlays at least a portion of the acoustic layer 110. In at least one example, the heater layer 102 is laminated to the acoustic layer 110 to form a laminated composite structure. The heater layer 102 can be part of the ice protection system 100, or another type of heating system.

Certain examples of the present disclosure provide a method including forming the perforations 104 in the heater layer 102. The perforations 104 extend from a first surface to a second surface opposite from the first surface. The perforations 104 provide acoustic paths. The heater layer 102 is configured to provide electrically resistive heating to a component 111. The method can also include coupling the heater layer 102 to the acoustic layer 110. The perforations 104 extend to the acoustic layer 110.

Figure 2 illustrates a plan view of the ice protection system 100, according to an example of the present disclosure. The heater layer 102 can include multiple conductive strips 112, each of which includes perforations 104 (shown in Figure 1). The heater layer 102 can include more conductive strips 112 than shown. Optionally, the heater layer 102 can include a single, monolithic sheet that covers a substrate (in contrast to multiple strips separated by gaps). The leads 108 are electrically coupled to the heater layer 102 to provide power thereto, so that the heater later 102 can provide electrically resistive heating to a structure, such as a portion of an engine of an aircraft.

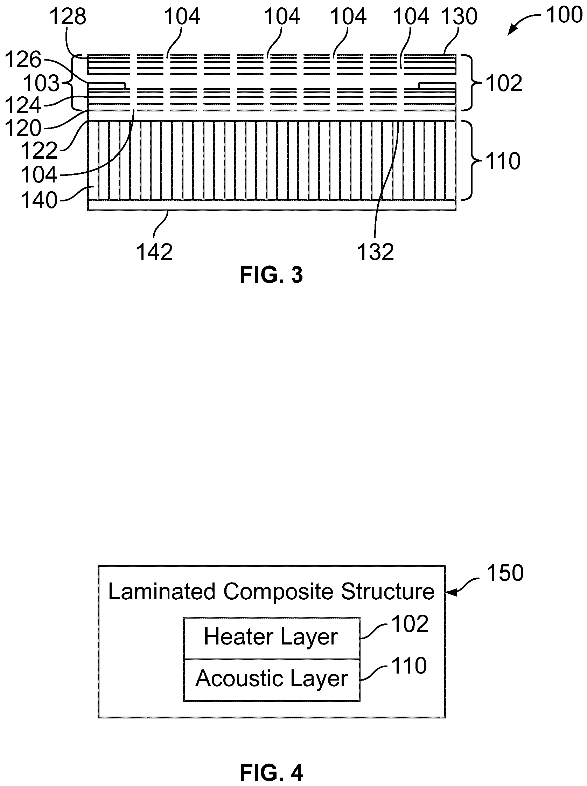

Figure 3 illustrates a cross-sectional view of the ice protection system 100 through line 3-3 of Figure 2. The heater layer 102 can overlay a portion of the acoustic layer 110. In at least one example, the heater layer 102 includes a dielectric layer 120 (such as one or more insulators) that overlays a film adhesive 122 over the acoustic layer 110. The dielectric layer 120 can include fiberglass prepreg, other insulator compatible laminate materials, and/or the like. A conductive heater 124 is disposed over the dielectric layer 120. A film 126 is disposed over the conductive heater 124. In at least one example, film 126 is a nickel chemical vapor deposition film. The film 126 can be any type of conductive film. Optionally, instead of a film, a metallic mesh can be used. Further, a surfacing film 128 formed of a similar material as the film 126 can be further disposed on the heater layer 102. In at least one example, the dielectric layer 120, the conductive heater 124, and the films 126 are laminated together to form the heater layer 102. In at least one example, the perforations 104 extend through an entire thickness 103 of the heater layer 102 from a first surface 130 (such an exposed surface) to a second surface 132 opposite from the first surface 130 (such as a covering surface over the acoustic layer 110). For example, the perforations 104 extend through the dielectric layer 120, the conductive heater 124, and the films. As such, the perforations 104 provide acoustic paths that lead to the acoustic layer 110. In this manner, acoustic energy can be directed through the heater layer 102 into the acoustic layer 110, which is configured to dampen the acoustic energy. Because the conductive heater 124 is resistively heated, the perforations do not inhibit heating capability of the conductive heater 124. Instead, the conductive heater 124 generates heat around the perforations. In this manner, electrical wires and leads do not extend through the heater layer 102, which thereby reduces size, weight, and complexity of the heater layer 102.

As shown, the acoustic layer 110 can include a composite core 140 disposed on a composite sheet or skin 142. The acoustic layer 110 can be a monolithic laminate or sandwiched structure. The acoustic layer 110 can be an acoustic cellular structure. The ice protection system 100 including the heater layer 102 can be integrated into a laminate structure, which also includes the acoustic layer 110.

As described, the heater layer 102 includes the perforations 104. The heater layer 102 can be disposed over at least a portion of a composite structure, such as the acoustic layer 110. The acoustic layer 110 can be acoustically active, perforated, or non-perforated. The heater layer 102 is configured to heat a component (such as a nacelle of an engine of an aircraft) when electrically coupled to the source of power 106. The perforations 104 of the heater layer 102 allow acoustic energy (such as noise) to pass into the acoustic layer 110, where such acoustic energy is attenuated. Because the heater layer 102 is a continuous network having the perforations 104, electrical continuity with the source of power 106 is maintained, thereby allowing the heater layer 102 to heat the component.

In at least one example, the ice protection system 100 is configured to heat a component, such as a nacelle of an engine, while the acoustic layer 110 is configured to attenuate sound energy. The perforations 104 of the heater layer 102 allow acoustic energy to pass through the heater layer 102, and into the acoustic layer 110, which dampens or otherwise attenuates the acoustic energy. In this manner, a component, such as a nacelle of an engine, can include the heater layer 102 disposed over (such as covering) a portion of the acoustic layer 110 (in contrast to prior known nacelles that have heaters separated from an acoustic layer). In this manner, a shorter, lighter, and more streamlined nacelle can be formed.

Figure 4 illustrates a block diagram of a laminated composite structure 150, according to an example of the present disclosure. The laminated composite structure 150 includes the heater layer 102 coupled to the acoustic layer 110, as described herein. The heater layer 102 and the acoustic layer 110 can be laminated together and cured to form the laminated composite structure 150. In at least one example, the heater layer 102 is part of an ice protection system 100, such as shown in Figure 1, which can be used to prevent, minimize, or otherwise reduce formation on and/or within a nacelle of an engine of an aircraft.

The laminated composite structure 150 can have a rectangular shape, but may have other shapes in other examples. Further, prior to use, the laminated composite structure 150 may be bent, molded, or otherwise formed into a non-planar shape to have a designated contour. In an example application, the laminated composite structure 150 may form a panel of an inlet cowl of a nacelle of an aircraft. The laminated composite structure 150 may include an integrated electrical load, which defines a powered zone. The powered zone can be located along a central area of the laminated composite structure 150. The powered zone may occupy a majority of the area of the laminated composite structure 150. In an example, the powered zone represents a heated area. The powered zone may be heated to prohibit ice accretion, to maintain the temperature of the laminated composite structure 150 within a designated range, and/or the like. The electrical load may include an electrically resistive ply that converts electrical energy to thermal energy.

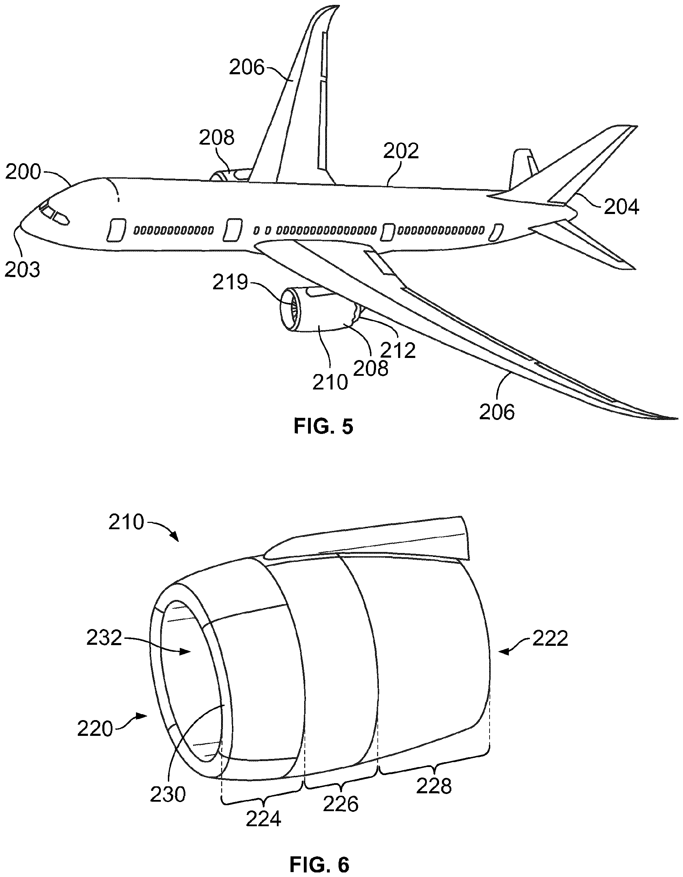

Figure 5 is a perspective illustration of an aircraft 200. The ice protection system 100 shown in Figure 1 and/or the laminated composite structure 150 shown in Figure 4 may be installed on the aircraft 200. The aircraft 200 may include a fuselage 202 extending from a nose 203 to an empennage 204. The empennage 204 may include one or more tail surfaces for directional control of the aircraft 200. The aircraft 200 includes a pair of wings 206 extending from the fuselage 202. One or more propulsion systems 208 propel the aircraft 200. The propulsion systems 208 are supported by the wings 206 of the aircraft 200, but may be mounted to the fuselage or tail in other types of aircraft. Each propulsion system 208 includes a rotor assembly 219 with rotors that spin to direct air.

The rotor assembly 219 of each propulsion system 208 is surrounded by a nacelle 210. The nacelle 210 is an outer casing or housing that holds the rotor assembly 219. The nacelle 210 includes an inlet section, referred to as an inlet cowl, at a leading or front end of the nacelle 210. The nacelle 210 may also include a fan cowl, a thrust reverser section, and an aft fairing section located behind the inlet cowl along a longitudinal length of the nacelle 210. The inlet cowl has an inner barrel that defines an air inlet duct for directing air to the rotor assembly 219. The nacelle 210 may have an exhaust nozzle 212 (for example, a primary exhaust nozzle and a fan nozzle) at an aft end of the propulsion system 208. In an example, each propulsion system 208 may include or represent a gas turbine engine. The rotor assembly 219 may be a portion of the engine. The engine burns a fuel, such as gasoline, kerosene, biofuel, or other fuel source, to generate thrust for propelling the aircraft 200.

Figure 6 illustrates an embodiment of the nacelle 210 of one of the propulsion systems 208 of the aircraft 200 according to an example. The nacelle 210 extends a length from a front end 220 to an aft end 222 (opposite the front end 220). The nacelle 210 may include an inlet cowl 224, a fan cowl 226 disposed aft of the inlet cowl 224, and at least one aft section 228 disposed aft of the fan cowl 226. The inlet cowl 224 defines a leading edge 230 of the nacelle 210 at the front end 220 to direct air into a core 232 of the nacelle 210.

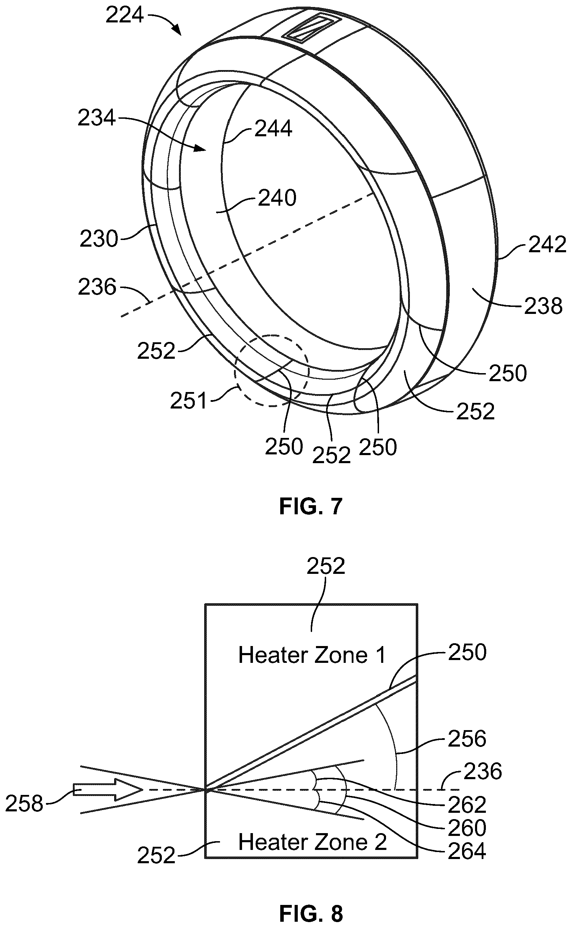

Figure 7 is a front view of the inlet cowl 224 shown in Figure 6. The inlet cowl 224 has an annular barrel shape that defines a central opening 234 that is fluidly connected to the core 232 (shown in Figure 6) of the nacelle 210. The term "annular barrel shape" means that the inlet cowl 224 defines a closed, ring-like shape when viewed from the front. The annular barrel shape is oriented about a central longitudinal axis 236 that extends through the central opening 234. The inlet cowl 224 may have a generally cylindrical shape. For example, the leading edge 230 may be circular. The inlet cowl 224 directs air through the central opening 234 into the core 232.

The inlet cowl 224 has the leading edge 230, an outer side 238 and an inner side 240. The outer side 238 extends from the leading edge 230 to an outer aft edge 242. The inner side 240 extends from the leading edge 230 to an inner aft edge 244. The outer side 238 is radially outside of the inner side 240 and surrounds the inner side 240. The inner side 240 may define the central opening 234 that operates as an intake duct to supply air into the core 232 for the rotor assembly 219. The inlet cowl 224 may define a cavity (not shown) that is aft of the leading edge 230 and radially disposed between the outer side 238 and the inner side 240.

In an example, the laminated composite structure 150 is used to define the leading edge 230 of the inlet cowl 224. For example, the laminated structure 150 may be assembled and then formed into the annular barrel shape. The ice protection system 100 (shown in Figure 1) and/or the heater layer 102 may define the skin of the inlet cowl 224 that is exposed to the ambient environment. Optionally, the laminated structure 150 shown in Figure 4 is one panel of multiple different panels assembled side by side along the circumference of the inlet cowl 224. For example, a first laminated structure 150 may be assembled adjacent to a second laminated structure 150 that has the same or a similar composition, shape, and size as the first laminated structure 150. In another example, the laminated structure 150 may be a unitary, one-piece structure that forms the entire annular leading edge 230 without any seams. In this one-piece embodiment, the laminated structure 150 optionally may include multiple electrical loads within the thickness, and the electrical loads may be separated from one another at seams.

The laminated structure(s) 150 may be a portion of an electric ice protection system (EIPS), such as the ice protection system 100 shown in Figure 1, that is used to meet engine ice accretion and ingestion requirements. The electrical loads may be heater elements (for example, electrically resistive plies). The heater elements convert electrical energy to thermal energy to warm the skin of the inlet cowl 224 along the leading edge 230. In an example, the laminated structure(s) 150 include multiple heater elements spaced apart from one another by seams. The heater elements are arranged along the circumference of the inlet cowl 224, such that each heater element defines a respective heater zone 252 that represents a circumferential section of the leading edge 230.

With continued reference to Figure 7, Figure 8 shows a portion of the inlet cowl 224 indicated by the dashed circle 251 in Figure 7. In an example, seams 250 are not oriented parallel to the central longitudinal axis 236 and/or the streamwise direction of airflow through the central opening 234. For example, the heater elements may be arranged such that the seams 250 defined between adjacent heater elements define an oblique angle 256 relative to the central longitudinal axis 236 and a streamwise direction of airflow 258 through the inlet cowl 224. The oblique angle 256 is not parallel or perpendicular. For example, the oblique angle 256 is between 1 and 89 degrees. In an example, the oblique angle 256 may be between 20 and 70 degrees. Optionally, the oblique angle 256 may be between 30 and 60 degrees. In an example, the seams 250 are oriented such that the seams 250 define an oblique angle relative to an entire range 260 of streamwise airflow directions that the aircraft 200 may experience in flight. For example, the range 260 may be defined between a maximum ascent angle 262 (while the aircraft is ascending) and a maximum descent angle 264 (while the aircraft is descending). The range 260 may be the maximum ascent angle 262 plus the maximum descent angle 264. As such, regardless of the angle of attack of the aircraft at a given time during typical flight conditions, the seams 250 are oriented oblique to the current streamwise direction of airflow 258.

In general, the seams 250 represent areas along the inlet cowl 224 that risk ice accumulation because the seams 250 may have a lower thermal flux than the adjacent heater zones 252. The ice accumulation can negatively affect aerodynamic properties of the aircraft 200 and may also potentially damage or increase wear on the rotor assembly 219. By orienting the heater elements such that the seams 250 between the heater zones 252 are oblique to the streamwise direction of airflow 258, the inlet cowl 224 avoids ice build-up. For example, the cold air moving in the airflow direction 258 only intersects the seams 250 at small areas before traversing the heater zones 252. Most cold air is heated along a first heater area 252, then traverses across a seam 250 before being heated along a second heater area 252.

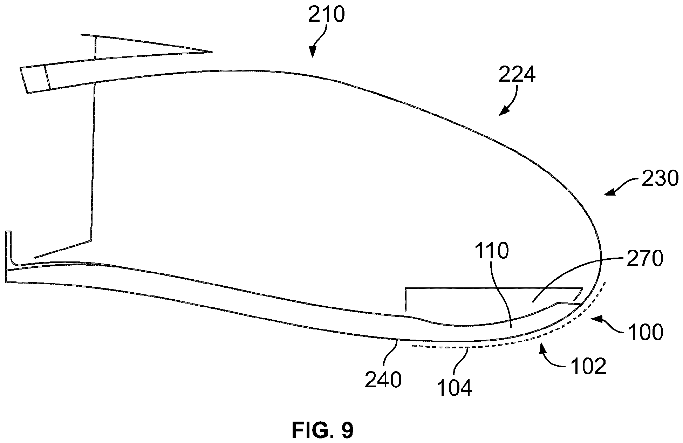

Figure 9 illustrates a transverse cross-sectional view of a portion of the inlet cowl 224 of the nacelle 210, according to an example of the present disclosure. As shown, the ice protection system 100 can be disposed at the leading edge 230 within the inner side 240. The heater layer 102 including the perforations 104 overlays (for example, covers) at least a portion of the acoustic layer 110. As such, the portion of the acoustic layer 110 is sandwiched between an interior structure 270 of the inlet cowl 224 and the heater layer 102. The overlapping portion of the heater layer 102 and the acoustic layer 110 reduces weight, size, and drag of the nacelle 210.

Further, the disclosure comprises examples according to the following clauses:
Clause 1. A system comprising:
   a heating layer including perforations extending from a first surface to a second surface opposite from the first surface, wherein the perforations provide acoustic paths, wherein the heating layer is configured to provide electrically resistive heating to a component.
Clause 2. The system of Clause 1, further comprising an acoustic layer coupled to the heating layer, wherein the perforations extend to the acoustic layer.
Clause 3. The system of Clause 2, wherein the heating layer overlays at least a portion of the acoustic layer.
Clause 4. The system of any of Clauses 1-3, wherein the heating layer is a carbon veil including carbon fibers or carbon nanotubes.
Clause 5. The system of any of Clauses 1-4, wherein the component includes a nacelle of an engine of an aircraft.
Clause 6. The system of any of Clauses 1-5, wherein the heating layer comprises:
   a dielectric layer;
   a conductive heater coupled to the dielectric layer; and
   one or more films coupled to the conductive heater.
Clause 7. The system of Clause 6, wherein the dielectric layer comprises fiberglass.
Clause 8. The system of Clauses 6 or 7, wherein the one or more films comprise a nickel chemical vapor deposition film.
Clause 9. The system of any of Clauses 6-8, wherein the perforations extend through the dielectric layer, the conductive heater, and the one or more films.
Clause 10. The system of any of Clauses 6-9, wherein the dielectric layer, the conductive heater, and the one or more films are laminated together.
Clause 11. An aircraft comprising:
   a propulsion system including a nacelle having an inlet cowl, wherein the inlet cowl comprises an acoustic layer coupled to an ice protection system, wherein the ice protection system comprises:
   a heating layer including perforations extending from a first surface to a second surface opposite from the first surface, wherein the perforations provide acoustic paths, wherein the heating layer is configured to provide electrically resistive heating to nacelle.
Clause 12. The aircraft of Clause 11, wherein the perforations extend to the acoustic layer.
Clause 13. The aircraft of Clause 12, wherein the heating layer overlays at least a portion of the acoustic layer.
Clause 14. The aircraft of any of Clauses 11-13, wherein the heating layer is a carbon veil including carbon fibers or carbon nanotubes.
Clause 15. The aircraft of any of Clauses 11-14, wherein the heating layer comprises:
   a dielectric layer;
   a conductive heater coupled to the dielectric layer; and
   one or more films coupled to the conductive heater.
Clause 16. The aircraft of Clause 15, wherein the dielectric layer comprises fiberglass.
Clause 17. The aircraft of Clauses 15 or 16, wherein the one or more films comprise a nickel chemical vapor deposition film.
Clause 18. The aircraft of any of Clauses 15-17, wherein the perforations extend through the dielectric layer, the conductive heater, and the one or more films.
Clause 19. The aircraft of any of Clauses 15-18, wherein the dielectric layer, the conductive heater, and the one or more films are laminated together.
Clause 20. A method comprising:
   forming perforations in a heating layer, wherein the perforations extend from a first surface to a second surface opposite from the first surface, wherein the perforations provide acoustic paths, and wherein the heating layer is configured to provide electrically resistive heating to a component; and
   coupling the heating layer to an acoustic layer, wherein the perforations extend to the acoustic layer.

As described herein, examples of the present disclosure provide an improved ice protection system for an engine of aircraft. Further, examples of the present disclosure provide a lighter ice protection system that increases operating efficiency of an engine of an aircraft.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like. Furthermore, where a certain quantity is indicated both in SI system and in United States customary units and doubts arise as to the correct numeric value, the United States customary units shall prevail.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are example embodiments. Many other embodiments will be apparent to those of ordinary skill in the art upon reviewing the above description. The scope of the various embodiments of the disclosure should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and may include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system comprising:
a heating layer including perforations (104) extending from a first surface (130) to a second surface (132) opposite from the first surface (130) of said heating layer (104), wherein the perforations (104) provide acoustic paths, wherein the heating layer is configured to provide electrically resistive heating to a component (111).

2. The system of claim 1, further comprising an acoustic layer (110) coupled to the heating layer (104), wherein the perforations (104) extend to the acoustic layer (110).

3. The system of claim 2, wherein the heating layer (104) overlays at least a portion of the acoustic layer (110).

4. The system of any one of the preceding claims, wherein the heating layer (104) is a carbon veil including carbon fibers or carbon nanotubes.

5. The system of any one of the preceding claims, further comprising a component (111), and wherein said component (111) includes a nacelle of an engine of an aircraft.

6. The system of any one of the preceding claims, wherein the heating layer (104) comprises:
a dielectric layer (120);
a conductive heater (124) coupled to the dielectric layer (120); and
one or more films (126) coupled to the conductive heater (124).

7. The system of claim 6, wherein the dielectric layer (120) comprises fiberglass.

8. The system of claim 6 or 7, wherein the one or more films (126) comprise a nickel chemical vapor deposition film (126).

9. The system of any one of claims 6 to 8, wherein the perforations (104) extend through the dielectric layer (120), the conductive heater (124), and the one or more films (126).

10. The system of any one of claims 6 to 9, wherein the dielectric layer (120), the conductive heater (124), and the one or more films (126) are laminated together.

11. An aircraft comprising:
a propulsion system including a nacelle (210) having an inlet cowl (224), wherein the inlet cowl comprises an acoustic layer (110) coupled to an ice protection system (100), wherein the ice protection system (100) comprises a system according to any one of claims 1 to 10.

12. An aircraft of claim 11, wherein the heater layer (102) and the acoustic layer (110) are laminated together and cured to form a laminated composite structure (150).

13. An aircraft of claim 12, comprising a plurality of laminated structures (150) assembled side by side along a circumference of the inlet cowl (224) to define a leading edge (230), wherein the laminated structures (150) include multiple heater elements spaced apart from one another by seams (250) such that each heater element defines a respective heater zone (252) that represents a circumferential section of the leading edge (230).

14. An aircraft of claim 13, wherein the inlet cowl (224) directs air through a central opening (234) into the core (232) of the nacelle (210), said central opening (234) having a central longitudinal axis (236), and wherein the seams (250) are oriented non-parallel to the central longitudinal axis (236) and/or the streamwise direction of airflow through said central opening (234).

15. A method comprising:
forming perforations (104) in a heating layer, wherein the perforations (104) extend from a first surface (130) to a second surface (132) opposite from the first surface (130), wherein the perforations (104) provide acoustic paths, and wherein the heating layer is configured to provide electrically resistive heating to a component (111); and
coupling the heating layer to an acoustic layer (110), wherein the perforations (104) extend to the acoustic layer (110).
